Europäisches Patentamt

European Patent Office

Office européen des brevets

(11) Publication number: **0 444 913 A1**

# (12) EUROPEAN PATENT APPLICATION

(21) Application number: 91301617.6

(22) Date of filing: 27.02.91

(51) Int. Cl.⁵: **F02C 7/143, F02C 3/34,**
**F02C 7/08, F01K 21/04**

(30) Priority: 27.02.90 ZA 901495
04.07.90 ZA 905239

(43) Date of publication of application:
04.09.91 Bulletin 91/36

(84) Designated Contracting States:
AT BE CH DE DK ES FR GB GR IT LI LU NL SE

(71) Applicant: **TURBINE DEVELOPMENTS**
**AKTIENGESELLSCHAFT**
**Aeulestrasse 74**
**Vaduz (LI)**

(72) Inventor: **Oliver, Michael John Basil**
**10 Kloof Road, Cowies Hill**
**Pinetown, Natal Province (ZA)**

(74) Representative: **Brooke-Smith, Fred et al**
**Stevens, Hewlett & Perkins 1 Serjeants' Inn**
**Fleet Street**
**London EC4Y 1LL (GB)**

(54) A gas turbine.

(57)    A gas turbine operating on a recuperative gas turbine cycle includes a compressor (12) having liquid feed means for feeding water (22) into air compressed during compression and intercooling means (24, 26) for cooling compressed air between compression stages. A heat exchanger (28) provides for heating of compressed air by hot exhaust gases from the power generating turbine (32) of the gas turbine, before the compressed air is fed into a combustion chamber (40) where it is mixed with fuel and the fuel is combusted for generating pressure/heat energy for driving the power generating turbine. The intercooling of air compressed in the compressor together with air cooling as a result of water vaporization and simultaneous vapour loading of the air, and the employment of hot exhaust gases for heating compressed air, result in a gas turbine cycle that can provide a gas turbine having a high thermal efficiency.

EP 0 444 913 A1

FIG 1

THIS INVENTION relates to turbines. More particularly, the invention relates to a gas turbine operating on a regenerative gas turbine cycle and to a method of operating a regenerative gas turbine cycle.

The general configuration of a gas turbine is well known to those skilled in the art. Essentially, such a turbine includes a first stage compressor whereby air or another gas is compressed and which is associated with simultaneous heating of the air or gas. The compressed and heated air or gas is fed into a combustion chamber where it is mixed with a fuel and through ignition, combustion of the fuel occurs. The pressure/heat energy generated through such combustion of the fuel then serves to drive a turbine whereby such energy is converted into mechanical power, which can be utilised through connection to a power take-off from the turbine.

The above general configuration of a gas turbine is well known and it is also known that the specific configuration of a gas turbine is greatly variable. This is not described in any further detail herein. The thermal efficiency of a conventional gas turbine is very low, usually between 30 and 40 per cent. One main factor for this low efficiency is the high power requirements of the compressor, particularly because of the heat generation that is commonly associated with compression.

In order to improve turbine efficiency, it has been proposed to provide for multi-stage compression with intercooling between compression stages and for heat generation by heating compressed air before its passage to the combustion chamber of the turbine by employing hot exhaust gases emitted from the turbine.

Although the above has resulted in thermal efficiency improvements, the thermal efficiency of gas turbines still remain relatively low and, accordingly, it is an object of this invention to provide a gas turbine with improved thermal efficiency.

Although reference is hereinafter made to the compression of air within the compressor of the gas turbine of the invention, other gases also can be compressed for the same purpose and, therefore, any reference herein to air must be interpreted as a reference to air or any other gas that can be compressed in the compressor of a gas turbine.

According to a first aspect of the invention there is provided a gas turbine operating on a regenerative gas turbine cycle, which includes

a gas compressor for polytropically compressing air in multiple stages, the gas compressor having primary liquid feed means for feeding water at a controlled rate into air during its compression passage through the compressor, and at least one intercooling means for cooling air compressed, which is disposed between two of the compression stages provided for by the compressor;

at least one combustion chamber for combusting a fuel mixed with heated compressed air from the gas compressor for generating pressure/heat energy;

a power generating turbine that can be driven by pressure/heat energy generated within the combustion chamber for generating power; and

a primary heat exchanger means for heating compressed air from the gas compressor by hot exhaust gases emitted from the power generating turbine, before the passage of the compressed air into the combustion chamber.

The gas compressor may be a multi-stage compressor comprising a series of individual compressors providing for compression in stages.

The primary liquid feed means may be disposed to feed water into air being compressed immediately upstream of each individual compressor. Alternatively, the primary liquid feed means is disposed to feed water into air being compressed within the individual compressors, during compression. For such a primary liquid feed means, the primary liquid feed means may be of a type that can feed water in fine droplet form into the individual compressors at various locations within the compressors along the path followed by air within the compressors during compression. The exact mode of liquid feed particularly is such that water erosion that can occur within the gas compressor is effectively minimised.

The gas turbine of the invention may include intercooling means between all the individual compressors. These intercooling means may comprise heat exchangers that can employ a liquid cooling medium for cooling air compressed by the gas compressor between individual compression stages.

The gas compressor of the gas turbine of the invention may be any suitable compressor that can provide for multi-stage compression and, as such, may be a multi-stage axial flow compressor having liquid feed means and intercooling means and, preferably, may be a multi-stage centrifugal compressor having liquid feed means and intercooling means.

The primary heat exchanger of the gas turbine of the invention may define a first passage for compressed air from the gas compressor to pass through and a second passage for exhaust gases from the power generating turbine to pass through, the said passages being disposed to permit heating of the compressed air by the exhaust gases.

Further according to the invention, the power generating turbine may be a multi-stage turbine with exhaust gases from the operative final stage turbine passing through the primary heat exchanger.

EP 0 444 913 A1

For one particular preferred embodiment of the invention, the power generating turbine may have a first exhaust outlet and a second exhaust outlet, the second exhaust outlet being connected to the gas compressor via the primary heat exchanger so that a controlled volume of exhaust gases from the power generating turbine can be cooled within the primary heat exchanger by compressed air passing therethrough and then be fed into the gas compressor under pressure, for complementing fresh air introduced into the gas compressor.

For this embodiment of the invention, the exhaust gases from the power generating turbine can be fed into the gas compressor at a location downstream of the first compression stage provided for by the compressor. Also for this embodiment of the gas turbine, a secondary heat exchanger may be provided, which is disposed between the primary heat exchanger and the gas compressor, for cooling exhaust gases fed to the gas compressor by a liquid cooling medium.

For this embodiment of the gas turbine and in which the power generating turbine is a multi-stage turbine, the first exhaust outlet may be provided by the operative final stage turbine and the second exhaust outlet by any operative prior stage turbine.

In general, the gas turbine of the invention also may include a secondary liquid feed means for feeding water into air compressed by the gas compressor after compression. This secondary liquid feed means may include a water spray for feeding water in fine droplet form into the compressed air.

Still further according to the invention, the gas turbine may include a heat exchanger for heating water to be fed into air compressed by the gas compressor by exhaust gases having passed through the primary heat exchanger. Alternatively, or in addition, the gas turbine may include a heat exchanger for heating water to be fed into air compressed by the gas compressor by hot compressed air, the said heat exchanger being located in line with air passing from a compression stage of the compressor to an intercooler.

The gas compressor also may include a fuel pump for feeding fuel under pressure to the combustion chamber. A heat exchanger also may be provided for heating fuel by exhaust gases having passed through the heat exchanger before the fuel is fed into the combustion chamber.

Further according to the invention, the power generating turbine of the gas turbine may be a multi-stage turbine and the gas turbine may then include combustion chambers disposed between turbine stages for combusting fuel mixed into gases passing from one turbine stage to the next.

Still further, the gas turbine may include drainage means for draining water condensate formed as a result of cooling of compressed air at locations upstream of the primary heat exchanger.

According to a second aspect of the invention there is provided a method of operating a regenerative gas turbine cycle, which includes the steps of

polytropically compressing air in multiple stages to a predetermined pressure, keeping overall temperature increases to a minimum by introducing determined quantities of water into the air compressed during its compression passage through a compressor and reducing the temperature of air compressed by feeding the air compressed through heat exchangers disposed between compression stages;

heating the compressed air within a suitable primary heat exchanger by employing hot exhaust gases generated by the turbine;

combusting fuel mixed with the heated compressed air for generating pressure/heat energy; and

driving a power generating turbine by pressure/heat energy generated through combustion, for generating power.

The method of the invention also may include introducing water in fine droplet form substantially continuously into air being compressed during the actual compression stages. This water feed may be such that water erosion within the compressor is minimized.

Also, the method may include employing cold water as a liquid cooling medium within the heat exchangers disposed between the compression stages of the compressor.

The introduction of water into the air being compressed by the compressor particularly may be controlled so that substantially all the water vaporises upon introduction and the vapour content within the compressed air approaches saturation continuously.

The method of the invention also may include introducing water in fine droplet form into compressed air from the compressor so that by the vaporisation of water so introduced, vapour saturation within the compressed air is approximated.

The method may include heating water introduced into air compressed before its introduction by employing hot exhaust gases passing from the primary heat exchanger. Alternatively, or in addition, the method may include heating water by employing hot compressed air passing from a compression stage of the compressor to an intercooler.

According to one particular method of operating a regenerative gas turbine cycle, in accordance with the invention, the method may include recirculating a portion of the exhaust gases from the power generating turbine back to the compressor to be combined under pressure with fresh air being compressed in the compressor,

4

the exhaust gases so recirculated being cooled within the primary heat exchanger.

As such, the method may include introducing exhaust gases recirculated to the compressor into the compressor after the first stage of fresh air compression and controlling the mass of exhaust gases so introduced so that the mass of fresh air introduced and compressed in the first stage of compression is minimized, while not affecting substantially the total mass of the mixture compressed and the final pressure of the compressed medium leaving the compressor.

This method also may include cooling exhaust gases recirculated to the compressor further within a secondary heat exchanger utilising any suitable liquid cooling medium.

In general, the method of the invention also may include compressing fuel before combustion thereof, as well as heating fuel before combustion thereof by employing hot exhaust gases passing from the primary heat exchanger.

The method also may include generating power within a multi-stage power generating turbine and providing for combustion of fuel within gases passing between turbine stages, for maintaining gas temperatures.

Still further, the method of the invention may include draining water condensate from compressed air at locations where cooling of compressed air occurs and condensation can occur.

Furthermore, the method of the invention may include compressing air for introduction into the compressor by an auxiliary compressor that is driven by an auxiliary power generating turbine driven by exhaust gases from the power generating turbine and cooling the said compressed air in a heat exchanger employing a liquid cooling medium before its introduction into the compressor.

The invention is now described, by way of examples, with reference to the accompanying diagrams, in which:

Figure 1 shows a flow diagram of the operating cycle of a first embodiment of a gas turbine, in accordance with the invention;

Figure 2 shows a flow diagram of the operating cycle of a second embodiment of a gas turbine, in accordance with the invention;

Figure 3 shows a flow diagram of the operating cycle of a third embodiment of a gas turbine, in accordance with the invention; and

Figure 4 shows a flow diagram of the operating cycle of a fourth embodiment of a gas turbine, in accordance with the invention.

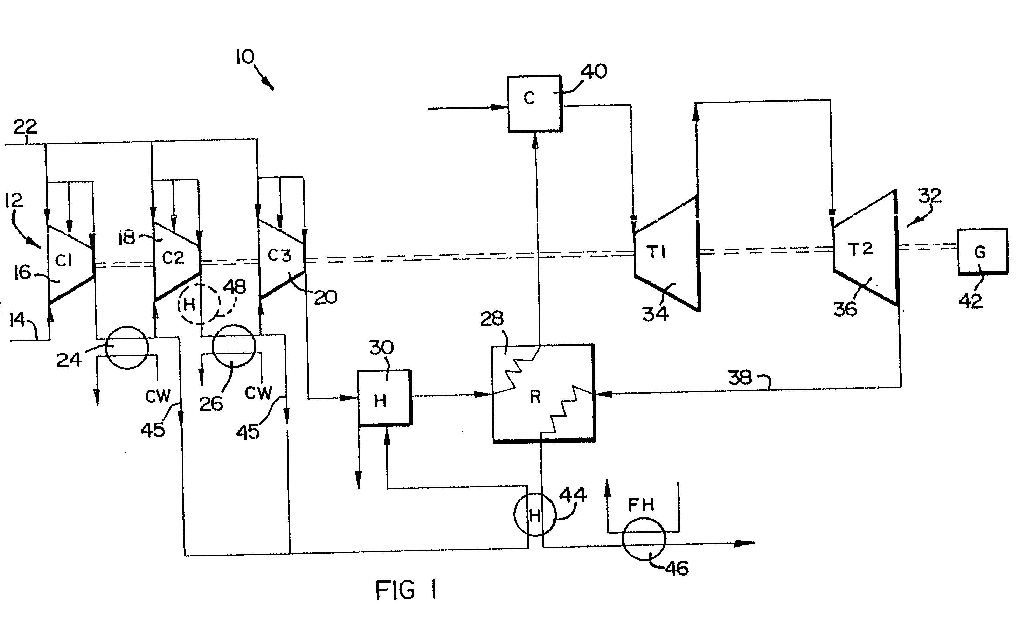

Referring initially to Figure 1 of the drawings, the operating cycle of a gas turbine operating on a regenerative gas turbine cycle, is designated generally by the reference numeral 10. The cycle 10 provides for the introduction of air into a compressor, generally indicated by the reference numeral 12, via an air inlet 14, the compressor 12 typically being a multi-stage centrifugal compressor including a first stage compressor 16, a second stage compressor 18 and a third stage compressor 20.

The operating cycle 10 also provides for the introduction of water and, preferably, heated water, into the individual compressors 16, 18 and 20, via a water supply 22, the water being introduced into the air being compressed at various stages within the air passage through the compressors, water introduction being such that compressor erosion is kept to a minimum. A first heat exchanger 24 is provided between the compressor 16 and the compressor 18 for cooling, by means of a liquid cooling medium such as water, air compressed within the first stage compressor 16, whereas a similar heat exchanger 26 is provided between the second stage compressor 18 and the third stage compressor 20, as illustrated.

The operating cycle 10 provides further for the passage of air compressed by the compressor 12 to a primary heat exchanger 28, the compressed air optionally passing through water feed means 30 for charging additional water into the compressed air upstream of the heat exchanger 28. This aspect is described in more detail hereafter.

The heat exchanger 28 provides for heating of compressed air by means of hot exhaust gases emitted by the power generating turbine, generally indicated by the reference numeral 32, which power generating turbine 32 includes a first stage power generating turbine 34 and a second stage power generating turbine 36. Exhaust gases from the second power generating turbine 36 are conveyed to the heat exchanger 28 by means of a suitable conduit 38, thus permitting the required heating of compressed air within the heat exchanger 28.

From the heat exchanger 28 the heated compressed air is passed to a combustion chamber 40 where it is mixed with a suitable fuel and where combustion takes place for generating power/heat energy for driving the power generating turbine 32. As is clear from Figure 1, exhaust gases from the first power generating turbine 34 drives the second power generating turbine 36, the power generating turbine 32 providing for a power take-off 42 from which nett power generated can be taken off for different applications. As is clear from the diagram, the power generating turbine 32 is operatively connected to the compressor 12 to provide for driving of the compressor 12 for compressing air as set out above. The operating cycle of the invention optionally provides for heating of water within a heat exchanger 44 before its introduction into compressed air within the water feed means 30, the heated water typically being partially obtained from condensate drawn via condensate outlets 45 from the heat exchangers 24 and 26 as shown. The heat exchanger 44 utilises exhaust gases passing from the heat exchanger 28 to provide for the required heating of water before fed into the compressed air by the water feed means 30.

Still further, a heat exchanger 46 is provided that employs exhaust gases having passed through the heat exchanger 44 for heating fuel before introduction into the combustion chamber 40, it being anticipated that the fuel can typically be methane fuel that can be provided under pressure.

Still further, the operating cycle 10 provides for the heating of water that is introduced into the compressor stages 16, 18 and 20, it being anticipated that this water can be heated by employing hot exhaust gases from the power generating turbine 32, for example, within the heat exchanger 44 and/or optionally by a heat exchanger 48 (only shown in dotted lines) disposed between the second stage compressor 18 and the heat exchanger 26 as illustrated.

Water fed into the compressed air during and after compression is fed into the compressed air at a controlled rate, the rate being such that substantially all water introduced will immediately vaporise upon introduction, with the objective being to approach vapour saturation of the compressed air continuously and in response to temperature increases in the compressed air, thus also maximizing the mass of compressed air that will eventually pass to the power generating turbine 32.

It is already known that intercooling as provided by the heat exchangers 24 and 26 will decrease the compressor work required without changing the turbine work, exhaust gases from the power generating turbine being utilised for the required heating of the air compressed before its introduction into the combustion chamber 40.

The introduction of regulated water feed during compression of air further reduces the compressor work required, while the additional working mass of gas leaving the compressor will increase the turbine output. Clearly, the water feed means 30 need merely be utilised if compressed air leaving the compressor 20 is not completely saturated, the objective of the water feed means 30 thus being that compressed air must be completely vapour saturated before its introduction into the heat exchanger 28.

By the water introduction into the compressor 12 and the resulting water vaporisation, as a result of the changing in state of the water into a vapour form, heat is withdrawn from the air being compressed. This heat withdrawal causes the temperature of the combined gas and vapour to be lowered, which will in turn provide for a reduced compressor work input requirement in order to provide for the necessary compression.

The lower gas temperatures leaving the compressor as a result of evaporative cooling, improves the regenerative heat exchange capacity of the cycle by being able to absorb more heat from exhaust gases, thus improving further the net cycle efficiency of the operating cycle. The lower temperature obtained during evaporative cooling is attributed essentially to the principle of partial pressures for air and water and the latent heat of vaporization for water. Also, by the recovery of sensible heat from the compressor exhaust within, for example, the heat exchanger 28 and also from the turbine exhaust to heat fuel and evaporative water, additional thermal efficiency increases can be provided for.

Typical operating parameters employed within the operating cycle 10 as described above, are set out hereafter by way of an example and in respect of a typical gas turbine operating on a regenerative gas turbine cycle.

EXAMPLE

INLET CONDITIONS :

air :

| | |
|---|---|
| mass | – 73.3 kg/s |
| temperature | – 15°C |
| pressure | – 101.3 kPa |

water :

| | |
|---|---|
| mass | – 1.268 kg/s into first stage compressor |
| | – 1.149 kg/s into second stage compressor |
| | – 0.963 kg/s into third stage compressor |
| temperature | – 115°C |

OPERATING CONDITIONS :

compressed air from compressor :

| | |
|---|---|
| temperature | – 64.8°C |
| pressure | – 804.6 kPa |

water introduced into compressor and/or water feed means :

| | |
|---|---|
| temperature | – 115°C |

compressed air after primary heat exchanger :

| | |
|---|---|
| temperature | – 606.8°C |

fuel :

| | |
|---|---|
| mass | – 1.032 kg/s |
| pressure | – 810 kPa |

gas medium after combustion chamber :

| | |
|---|---|
| temperature | – 1140°C |

## gas medium after first stage power generating turbine :

temperature            – 874.7°C

pressure              – 282.84 kPa

## exhaust gas from power generating turbine :

temperature            – 656.8°C

## exhaust gas leaving system :

temperature            – 143.2°C

pressure              – 101.3 kPa

For the above parameters, the net output power from the power generating turbine can be 30.47 MW, providing for a thermal efficiency of approximately 58,5%.

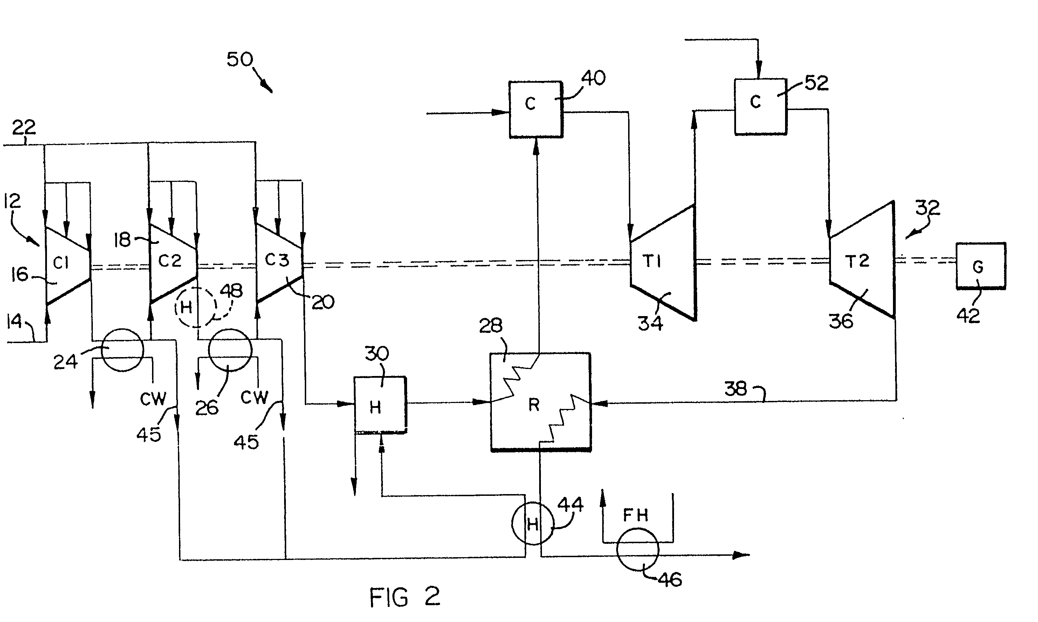

Referring now to Figure 2 of the drawings, the operating cycle of a second embodiment of a gas turbine operating on a regenerative gas turbine cycle, in accordance with the invention, is designated generally by the reference numeral 50. With the same components and parts of the gas turbine being indicated by the same reference numerals as before, the cycle 50 is essentially the equivalent of the cycle 10 described with reference to Figure 1, except that a second combustion chamber 52 is provided between the first turbine stage 34 and the second turbine stage 36 to provide for the reheat of gas medium passing from the turbine stage 34 to the turbine stage 36, by combustion of additional fuel within the combustion chamber 52.

The additional pressure/heat energy so generated increases the power output of the second power generating turbine 36 and as a result of this reheat of the gas medium passing between the turbine stages, and whereby the difference in temperature of gas medium entering the respective turbine stages is minimized, for the parameters as set out in the example above, the overall thermal efficiency of the gas turbine can be increased to approximately 60.9%.

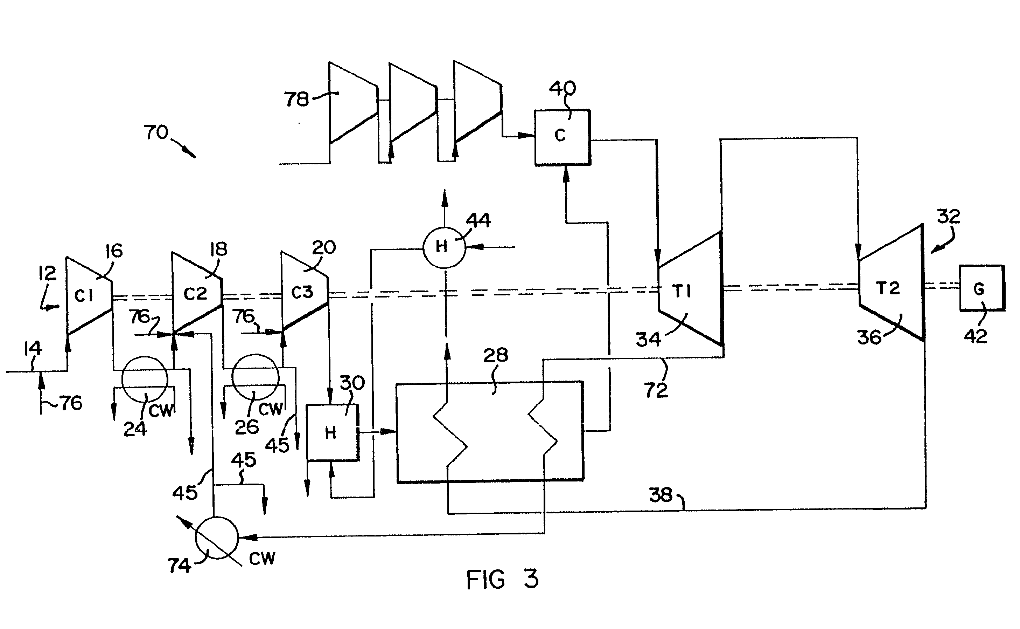

Referring now to Figure 3 of the drawings, the operating cycle of a third embodiment of a gas turbine operating on a regenerative gas turbine cycle, is designated generally by the reference numeral 70.

With like components and parts of the turbine again being indicated by the same reference numerals as before, this operating cycle provides for the division of exhaust gases from the first power generating turbine 34, approximately one third of the exhaust gas medium from the power generating turbine 34 passing through the second power generating turbine 36, from which the exhaust gases then pass to the heat exchanger 28 for the purpose of heating compressed air in the same manner as described above with reference to Figures 1 and 2.

For this cycle, approximately two thirds of the exhaust gas medium from the first power generating turbine 34 is recirculated to the compressor 12 by means of a conduit 72, the exhaust gases passing through the conduit 72 passing through the heat exchanger 28 where it will serve to heat compressed air passing through the heat exchanger 28. This will result in cooling of the exhaust gases which will hence pass through an additional heat exchanger 74, which employs a liquid cooling medium such as water, to provide for additional cooling of exhaust gas medium. After the heat exchanger 74 all condensate is withdrawn from the exhaust gases before being introduced into the second stage compressor 18 of the compressor 12.

The particular compressor 12 utilised here provides for the introduction of water into air to be compressed immediately before entering each compressor stage, suitable water feed means 76 thus being provided as shown.

The exhaust gases recirculated are fed into the compressor stage 18 under pressure, where it is combined with air compressed within the first compressor stage 16, the quantity of air introduced into the first compressor stage 16 being approximately one third of the total compressed gas medium requirement of the gas turbine, with the remaining two thirds being provided by exhaust gases recirculated.

The benefit of this cycle is that the work requirement of the compressor 12 is significantly reduced insofar as the power requirement within the first compressor stage 16 need merely be sufficient to compress approximately one third of the total mass requirement of the gas to be compressed, unlike the full mass requirement that is compressed within the first compression stages of the first and second embodiments of turbines described with reference to Figures 1 and 2.

The operating cycle 70 also provides for water heating whereas a compressor 78 is provided for compressing fuel before its introduction into the combustion chamber 40, which will further enhance the power/heat generation within the combustion chamber 40.

Typical operating parameters employed within the operating cycle 70 as described above, are set out hereafter by way of an example and in respect of a typical gas turbine operating on a regenerative gas turbine cycle.

## EXAMPLE

INLET CONDITIONS :

<u>air</u> :

| mass | – 24.43 kg/s |
| temperature | – 15°C |
| pressure | – 101.3 kPa |

<u>water</u> :

| temperature | – 115°C |

## OPERATING CONDITIONS :

compressed air from compressor :

| | |
|---|---|
| temperature | — 82.5°C |
| pressure | — 850 kPa |

water introduced into compressor and/or water feed means :

| | |
|---|---|
| temperature | — 115°C |

compressed air after primary heat exchanger :

| | |
|---|---|
| temperature | — 675°C |

fuel :

| | |
|---|---|
| mass | — 0.89 kg/s |
| temperature | — 251.7°C |

gas medium after combustion chamber :

| | |
|---|---|
| pressure | — 1291.5 kPa |
| temperature | — 1140°C |

gas medium before heat exchanger 28 after first stage power generating turbine:

| | |
|---|---|
| mass | — 49.5 kg/s |
| temperature | — 741.8°C |
| pressure | — 237.3 kPa |

gas medium after first stage power generating turbine and after heat exchangers 28 :

| | |
|---|---|
| temperature | — 134.4°C |

gas medium from first stage power generating turbine to second stage power generating turbine :

| | |
|---|---|
| mass | — 24.4 kg/s |
| pressure | — 237.3 kPa |
| Temperature | — 741.8°C |

exhaust gas from second stage power generating turbine :

| | |
|---|---|
| pressure | — 102.3 kPa |
| temperature | — 579.3°C |

For the above parameters net output power from the power generating turbine can be 27.25 MW providing for a thermal efficiency of the turbine of 61.24%.

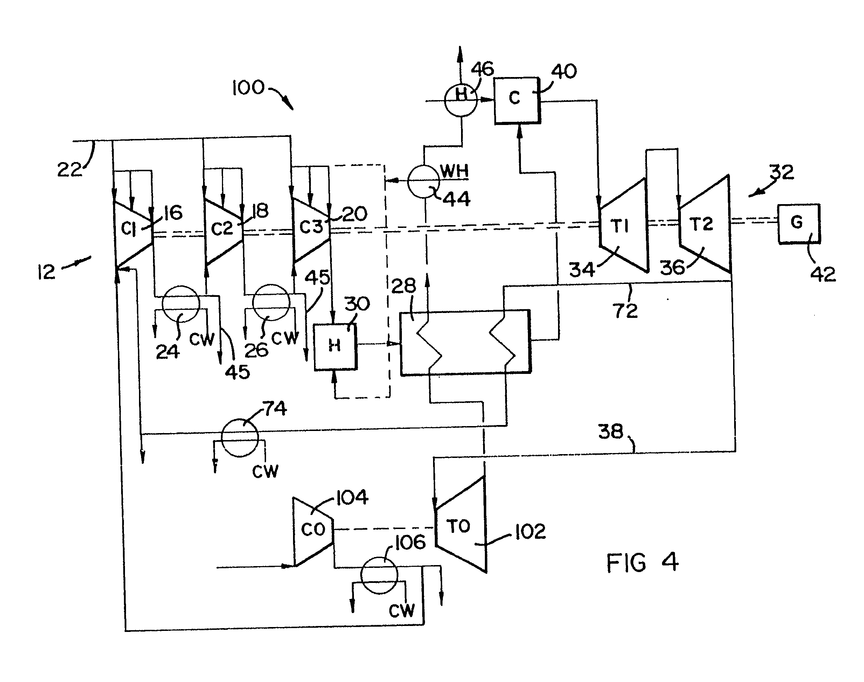

Referring now to Figure 4 of the drawings, the operating cycle of a fourth embodiment of a gas turbine operating on a regenerative gas turbine cycle is designated generally by the reference numeral 100. Once again, with the same components and parts being identified by the same reference numerals as before, the cycle as shown in Figure 4 is essentially the equivalent of the cycle as shown in Figure 3, except insofar as the mode of water introduction is equivalent to that of the cycles as shown in Figures 1 and 2 and exhaust gases from the second stage power generating turbine 36 before being passed through the heat exchanger 28 are utilised to drive an auxiliary turbine 102, which in turn can drive an auxiliary compressor 104, the compressor 104 providing for the compression of air and water before introduction thereof into the main compressor 12. The air/water mixture so compressed within the compressor 104 is first passed through a heat exchanger 106 that can cool the compressed medium, utilising a liquid cooling medium such as water, before introduction into the compressor 12. This pre-compression of air once again reduces the power requirements of the compressor 12 and thus again enhances the overall thermal efficiency of a gas turbine by operating on the cycle 100 as shown.

Typical operating parameters employed within the operating cycle 100 as described above, are set out hereafter by way of an example and in respect of a typical gas turbine operating on a regenerative gas turbine cycle.

## EXAMPLE

### INLET CONDITIONS :

#### air into auxiliary compressor :

| | |
|---|---|
| mass | – 24.43 kg/s |
| temperature | – 15°C |
| pressure | – 101.3 kPa |

#### water into auxiliary compressor :

| | |
|---|---|
| mass | – 0.279 kg/s |
| temperature | – 115°C |

#### air into main compressor :

| | |
|---|---|
| temperature | – 24.8°C |
| pressure | – 149 kPa |

#### water introduced into compressor :

| | |
|---|---|
| mass | – 1.155 kg/s into first stage compressor |
| | – 0.998 kg/s into second stage compressor |
| | – 0.816 kg/s into third stage compressor |
| temperature | – 115°C |

OPERATING CONDITIONS:

<u>compressed air from compressor</u> :

| | |
|---|---|
| temperature | –  69°C |
| pressure | –  1186 kPa |

<u>water introduced into water feed means</u> :

| | |
|---|---|
| temperature | –  115°C |

<u>compressed air after primary heat exchanger</u> :

| | |
|---|---|
| temperature | –  615°C |

<u>fuel into combustion chamber</u> :

| | |
|---|---|
| mass | –  0.99 kg/s |
| pressure | –  1200 kPa |

<u>gas medium after combustion chamber</u> :

| | |
|---|---|
| temperature | –  1140°C |

<u>gas medium after first stage power generating turbine</u> :

| | |
|---|---|
| temperature | –  884°C |
| pressure | –  424.26 kPa |

<u>exhaust gas from second power generating turbine for recirculation</u> :

| | |
|---|---|
| mass | –  49.5 kg/s |
| temperature | –  665°C |
| pressure | –  150 kPa |

<u>gas medium for recirculation after heat exchanger</u> :

| | |
|---|---|
| temperature | –  120°C |

<u>gas medium between auxiliary compressor and heat exchanger</u> :

| | |
|---|---|
| mass | –  150 kPa |
| temperature | –  592.8°C |

<u>exhaust gases after heat exchanger</u> :

| | |
|---|---|
| temperature | –  120°C |

For the above parameters, the net output from the power generating turbine can be 30.19 MW, providing for a thermal efficiency of approximately 60.71 %.

In general, it must be understood that the main features of all four the above cycles relate to the introduction of water into the compressors 12, which provides the benefits as are set out above, the various other features of the cycles as described above being employable in combination with the different cycles in order to gain maximum advantage for particular applications. For example, reheating of gas medium between power generating turbine stages can be utilised for the cycles as illustrated in Figures 3 and 4, whereas the cycle illustrated in Figure 3 also can provide for the continuous introduction of water during actual compression within the compressor stages. Various other features also can be used separately or in combination.

The operating cycles of the gas turbines as described above clearly provide for exceptionally high efficiencies so that for a predetermined required work output and when compared with known gas turbines, fuel requirements can be almost halved. Also, the mass of gas utilised in the cycles are halved, leading to smaller turbines, which in turn provides for cheaper turbines.

A further advantage of the introduction of water vapour into compressed air is that levels of NO emission is low, while combustion efficiencies are high. The cycles of the invention also provide for rapid start-up and response and for power station applications, as no boiler plants are required, gas turbines are provided as relatively compact units.

Gas turbines in accordance with the invention also permit the use of various types of fuel, which may both include gas and liquid fuels.

## Claims

1. A gas turbine operating on a regenerative gas turbine cycle, characterized in that it includes

   a gas compressor for polytropically compressing air in multiple stages, the gas compressor having primary liquid feed means for feeding water at a controlled rate into air during its compression passage through the compressor, and at least one intercooling means for cooling air compressed, which is disposed between two of the compression stages provided for by the compressor;

   at least one combustion chamber for combusting a fuel mixed with heated compressed air from the gas compressor for generating pressure/heat energy;

   a power generating turbine that can be driven by pressure/heat energy generated within the combustion chamber for generating power; and

   a primary heat exchanger means for heating compressed air from the gas compressor by hot exhaust gases emitted from the power generating turbine, before the passage of the compressed air into the combustion chamber.

2. A gas turbine as claimed in Claim 1, characterized in that the gas compressor is a multi-stage compressor comprising a series of individual compressors providing for compression in stages.

3. A gas turbine as claimed in Claim 2, characterized in that the primary liquid feed means is disposed to feed water into air being compressed immediately upstream of each individual compressor.

4. A gas turbine as claimed in Claim 2, characterized in that the primary liquid feed means is disposed to feed water into air being compressed within the individual compressors, during compression.

5. A gas turbine as claimed in Claim 4, characterized in that the primary liquid feed means is of a type that can feed water in fine droplet form into the individual compressors at various locations within the compressors along the path followed by air within the compressors during compression.

6. A gas turbine as claimed in any one of Claims 2 to 5, characterized in that it includes intercooling means disposed between all the individual compressors.

7. A gas turbine as claimed in Claim 6, characterized in that the intercooling means comprise heat exchangers that can employ a liquid cooling medium for cooling air compressed by the gas compressor between individual compression stages.

8. A gas turbine as claimed in any one of Claims 2 to 7, characterized in that the gas compressor is a multi-stage centrifugal compressor having liquid feed means and intercooling means.

9. A gas turbine as claimed in any one of the preceding claims, characterized in that the primary heat exchanger defines a first passage for compressed air from the gas compressor to pass through and a second passage for exhaust gases from the power generating turbine to pass through, the said passages being disposed to permit heating of the compressed air by the exhaust gases.

10. A gas turbine as claimed in Claim 9, characterized in that the power generating turbine is a multi-stage turbine with exhaust gases from the operative final stage turbine passing to the primary heat exchanger.

EP 0 444 913 A1

**11.** A gas turbine as claimed in any one of Claims 1 to 8, characterized in that the power generating turbine has a first exhaust outlet and a second exhaust outlet, the second exhaust outlet being connected to the gas compressor via the primary heat exchanger so that a controlled volume of exhaust gases from the said second exhaust outlet can be cooled within the primary heat exchanger by compressed air passing therethrough and then be fed into the gas compressor under pressure, for complementing fresh air introduced into the gas compressor.

**12.** A gas turbine as claimed in Claim 11, characterized in that the exhaust gases from the second exhaust outlet can be fed into the gas compressor at a location down stream of the first compression stage provided for by the compressor.

**13.** A gas turbine as claimed in Claim 11 or Claim 12, characterized in that it includes a secondary heat exchanger disposed between the primary heat exchanger and the gas compressor, for cooling exhaust gases fed to the gas compressor by a liquid cooling medium.

**14.** A gas turbine as claimed in any one of Claims 11 to 13, characterized in that the power generating turbine is a multi-stage turbine with the first exhaust outlet being provided by the operative final stage turbine and the second exhaust outlet by an operative prior turbine.

**15.** A gas turbine as claimed in any one of the preceding claims, characterized in that it includes a secondary liquid feed means for feeding water into air compressed by the gas compressor after compression.

**16.** A gas turbine as claimed in Claim 15, characterized in that the liquid feed means includes a water spray for feeding water in fine droplet form into the compressed air.

**17.** A gas turbine as claimed in any one of the preceding claims, characterized in that it includes a heat exchanger for heating water to be fed into air compressed by the gas compressor by exhaust gases having passed through the primary heat exchanger.

**18.** A gas turbine as claimed in any one of the preceding claims, characterized in that it includes a heat exchanger for heating water to be fed into air compressed by the gas compressor by hot compressed air, the said heat exchanger being located in line with air passing from a compression stage of the compressor to an intercooler.

**19.** A gas turbine as claimed in any one of the preceding claims, characterized in that it includes a fuel pump for feeding fuel under pressure to the combustion chamber.

**20.** A gas turbine as claimed in any one of the preceding claims, characterized in that it includes a heat exchanger for heating fuel by exhaust gases having passed through the heat exchanger before the fuel is fed into the combustion chamber.

**21.** A gas turbine as claimed in any one of the preceding claims, characterized in that the power generating turbine is a multi-stage turbine and which includes combustion chambers between turbine stages for combusting fuel mixed into gases passing from one turbine stage to the next.

**22.** A gas turbine as claimed in any one of the preceding claims, characterized in that it includes drainage means for draining water condensate formed as a result of cooling of compressed air at locations upstream of the primary heat exchanger.

**23.** A method of operating a regenerative gas turbine cycle, characterized in that it includes the steps of
polytropically compressing air in multiple stages to a predetermined pressure, keeping overall temperature increases to a minimum by introducing determined quantities of water into the air compressed during its compression passage through a compressor and reducing the temperature of air compressed by feeding the air compressed through heat exchangers disposed between compression stages;
heating the compressed air within a suitable primary heat exchanger by employing hot exhaust gases generated by the turbine;
combusting fuel mixed with the heated compressed air for generating pressure/heat energy; and
driving a power generating turbine by pressure/heat energy generated through combustion, for

EP 0 444 913 A1

generating power.

24. A method as claimed in Claim 23, characterized in that it includes introducing water in fine droplet form substantially continuously into air being compressed during the actual compression stages.

25. A method as claimed in Claim 23 or Claim 24, characterized in that it includes employing cold water as a liquid cooling medium within the heat exchangers disposed between the compression stages of the compressor.

26. A method as claimed in any one of Claims 23 to 25, characterized in that it includes controlling the introduction of water into the air being compressed by the compressor so that substantially all the water vaporises upon introduction and the vapour content within the compressed air approaches saturation continuously.

27. A method as claimed in any one of Claims 23 to 26, characterized in that it includes introducing water in fine droplet form into compressed air from the compressor so that by the vaporisation of water so introduced, vapour saturation within the compressed air is approximated.

28. A method as claimed in any one of Claims 23 to 27, characterized in that it includes heating water introduced into air compressed before its introduction by employing hot exhaust gases passing from the primary heat exchanger.

29. A method as claimed in any one of Claims 23 to 28, characterized in that it includes heating water introduced into air compressed before its introduction by employing hot compressed air passing from a compression stage of the compressor to an intercooler.

30. A method as claimed in any one of Claims 23 to 29, characterized in that it includes recirculating a portion of exhaust gases from the power generating turbine back to the compressor to be combined under pressure with fresh air being compressed in the compressor, the exhaust gases so recirculated being cooled within the primary heat exchanger.

31. A method as Claimed in Claim 30, characterized in that it includes introducing exhaust gases recirculated to the compressor into the compressor after the first stage of fresh air compression and controlling the mass of exhaust gases so introduced so that the mass of fresh air introduced and compressed in the first stage of compression is minimized, while not affecting substantially the total mass of the mixture compressed and the final pressure of the compressed medium leaving the compressor.

32. A method as claimed in Claim 30 or Claim 31, characterized in that it includes cooling exhaust gases recirculated to the compressor further within a secondary heat exchanger utilising any suitable liquid cooling medium.

33. A method as claimed in any one of Claims 23 to 33, characterized in that it includes compressing fuel before combustion thereof.

34. A method as claimed in any one of Claims 23 to 34, characterized in that it includes heating fuel before combustion thereof by employing hot exhaust gases passing from the primary heat exchanger.

35. A method as claimed in any one of Claims 23 to 34, characterized in that it includes generating power within a multi-stage power generating turbine and providing for combustion of fuel within gases passing between turbine stages, for maintaining gas temperatures.

36. A method as claimed in any one of Claims 23 to 35, characterized in that it includes draining water condensate from compressed air at locations where cooling of compressed air occurs and condensation can occur.

37. A method as claimed in any one of Claims 23 to 36, characterized in that it includes compressing air for introduction into the compressor by an auxiliary compressor that is driven by an auxiliary power generating turbine driven by exhaust gases from the power generating turbine and cooling the said compressed air

15

in a heat exchanger, employing a liquid cooling medium, before its introduction into the compressor.

FIG 1

FIG 2

EP 0 444 913 A1

FIG 3

FIG 4

**European Patent Office**

# EUROPEAN SEARCH REPORT

Application Number

EP 91 30 1617

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1308962 (KLEMENTA GOTTWALDA) <br> * the whole document * | 1-3, <br> 6-10, <br> 15, 17, <br> 21-23 | F02C7/143 <br> F02C3/34 <br> F02C7/08 <br> F01K21/04 |
| X | | 25, 26, <br> 28, <br> 35-37 | |
| Y | | 4, 5, <br> 11-14, <br> 16, 24 | |
| Y | | 27, <br> 30-32 | |
| X | FR-A-1467142 (BEYRARD) <br> * the whole document * | 1 | |
| Y | | 4, 5, <br> 16, 24, <br> 27 | |
| Y | DE-B-1235669 (GASPAROVIC) <br> * the whole document * | 11-14, <br> 30-32 | TECHNICAL FIELDS SEARCHED (Int. Cl.5) |
| A | DE-A-2138739 (STEAG) <br> * the whole document * | 11, 13, <br> 14, 18 | F02C <br> F01K |
| A | US-A-2303381 (NEW) <br> * the whole document * | 9—11, <br> 19, 23, <br> 30, 32, <br> 35, 37 | |
| X | FR-A-1007140 (RATEAU) <br> * the whole document * | 1, 2, 4, <br> 9, 17 | |
| A | CH-A-257535 (BBC) | | |
| A | US-A-2407165 (KREITNER) | | |

The present search report has been drawn up for all claims

| Place of search | Date of completion of the search | Examiner |
|---|---|---|
| THE HAGUE | 03 JUNE 1991 | IVERUS D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    & : member of the same patent family, corresponding document

EPO FORM 1503 03.82 (P0401)